# EUROPÄISCHE PATENTANMELDUNG

(11) **EP 1 956 262 A1**
(43) Veröffentlichungstag der Anmeldung: **13.08.2008**
(21) Anmeldenummer: 08000797.4
(22) Anmeldetag: 17.01.2008
(51) Int. Cl.: F16F 9/36

(54) **Verschlusspaket für einen Schwingungsdämpfer und Schwingungsdämpfer mit einem solchen Verschlusspaket**

(30) Priorität: 06.02.2007 DE 102007005690
(71) Anmelder: ThyssenKrupp Bilstein Suspension GmbH, 58256 Ennepetal (DE)
(72) Erfinder: Drees, Helmut, Dipl.-Ing., 58256 Ennepetal (DE); Nevoigt, Andreas, Dr.-Ing., 58313 Herdecke (DE); Feist, Dirk, 44627 Herne (DE); Brendecke, Thomas, Dr.-Ing., 31228 Peine (DE); Schmidt, Norbert, Dipl.-Ing., 65391 Lorch (DE)
(74) Vertreter: Adams, Steffen

(57) **Zusammenfassung**

Die Erfindung betrifft ein Verschlusspaket (1) zum Verschließen eines Dämpferrohres (2) eines Schwingungsdämpfers, insbesondere eines hydraulischen oder hydropneumatischen Schwingungsdämpfers für Radaufhängungen von Kraftfahrzeugen, umfassend ein Führungsteil (4) zur Führung der Kolbenstange (5) und ein zumindest ein Dichtungselement (6, 7) aufnehmendes Trägerteil (3), wobei das Führungsteil (4) eine dem Trägerteil (3) und das Trägerteil (3) eine dem Führungsteil (4) zugewandte Oberfläche aufweist, und wobei Führungsteil (4) und Trägerteil (3) sich im zusammengebauten Zustand des Verschlusspakets (1) in einem Kontaktabschnitt mit ihren einander zugewandten Oberflächen gegeneinander abstützen. Um ein derartiges Verschlusspaket kostengünstig und insbesondere ohne Verwendung von spanend zu bearbeitenden Bauteilen herstellen zu können, wird vorgeschlagen, dass zumindest das Trägerteil (3) oder zumindest das Führungsteil (4) an seinem Außenumfang einen sich in radialer Richtung erstreckenden Absatz (14) aufweist, der mit der dem Absatz (14) zugewandten Oberfläche des jeweils anderen Teiles (4, 3) eine Aufnahmenut (15) für ein zwischen Verschlusspaket (1) und Dämpferrohr (2) wirksames Dichtungselement (16) bildet.

## Beschreibung

Die Erfindung betrifft ein Verschlusspaket für einen Schwingungsdämpfer, insbesondere einen hydraulischen oder hydropneumatischen Schwingungsdämpfer für die Radaufhängung eines Kraftfahrzeugs. Die Erfindung betrifft auch einen Schwingungsdämpfer mit einem Verschlusspaket.

Verschlusspakete dienen bei Schwingungsdämpfern dazu, das Dämpferrohr, in dem ein an einer Kolbenstange befestigter Dämpfungskolben oszillierend hin und her bewegbar angeordnet und das mit einem Dämpfungsmedium gefüllt ist, dichtend zu verschließen. Gleichzeitig erfüllt das Verschlusspaket die Funktion der Zentrierung und Führung der sich hin und her bewegenden Kolbenstange. Wegen dieser Doppelfunktion (Abdichten des Dämpferrohres und Führung der Kolbenstange) werden Verschlusspakete für Schwingungsdämpfer auch als Dichtungs- und Führungspakete bezeichnet.

Es ist allgemein bekannt, Verschlusspakete für Schwingungsdämpfer zwei- oder mehrteilig auszubilden. Bei zweiteiligen Verschlusspaketen sind üblicherweise zwei in Axialrichtung des Dämpferrohres hintereinander angeordnete Bauteile vorgesehen, von denen eines die zur Abdichtung notwendige, oftmals ebenfalls mehrteilig ausgebildete Dichtung aufnimmt, während das andere zur Führung der sich hin und her bewegenden Kolbenstange dient. Das die Dichtung aufnehmende Bauteil kann als Trägerteil bezeichnet werden, weil es die Dichtung trägt. Das die Kolbenstange führende Bauteil kann als Führungsteil bezeichnet werden.

Aus der DE 44 32 305 A1 ist beispielsweise ein zweiteilig ausgebildetes Verschlusspaket bekannt, bei dem das Führungsteil dem Innenraum des Dämpferrohres zugeordnet ist, während das Trägerteil vom Dämpferrohrinnenraum aus gesehen axial hinter dem Führungsteil angeordnet ist. Dieses bekannte Verschlusspaket weist die Merkmale des Oberbegriffs des Patentanspruchs 1 auf und ist in Axialrichtung des Dämpferrohres verschiebbar zwischen zwei in die Innenwand des Dämpferrohres eingesetzten Sprengringen angeordnet. Dadurch wird das aus der DE 44 32 305 A1 bekannte Verschlusspaket beim Auftreten von in axialer Richtung wirkenden Kräften (z.B. Pufferkräften), die größer als die durch den Innendruck des Dämpfers aufgebrachte Kraft sind, verschoben und schlägt dann an den jeweiligen Sprengring an. Dies kann insbesondere dann auftreten, wenn sich, wie z.B. bei Luftfederbeinen, oberhalb des Verschlusspaketes ebenfalls ein Druck aufbauen kann.

Mit dieser bekannten Konstruktion sind jedoch verschiedene Nachteile verbunden. So können die als Axialsicherungen dienenden Sprengringe keine Druckanschlagkräfte und nur in geringem Umfang Zuganschlagkräfte aufnehmen. Außerdem ist bei dem aus der DE 44 32 305 bekannten Schwingungsdämpfer zusätzlich zu dem Verschlusspaket ein das Dämpferrohr verschließender Deckel vorgesehen.

Der Erfindung liegt die Aufgabe zugrunde, ein Verschlusspaket mit den Merkmalen des Oberbegriffs des Patentanspruchs 1 vorzuschlagen, welches kostengünstig und insbesondere ohne Verwendung von spanend zu bearbeitenden Bauteilen herzustellen und einfach zu montieren ist.

Weiterhin liegt der Erfindung die Aufgabe zugrunde, einen mit einem Verschlusspaket verschlossenen Schwingungsdämpfer zu schaffen, bei dem zumindest in Druckrichtung der Kolbenstangenbewegung die Druckanschlagkraft, die bei Erreichen der maximalen Kolbenstangenbewegung in Druckrichtung auftritt, von dem Verschlusspaket aufgenommen werden kann.

Diese Aufgabe wird hinsichtlich des Verschlusspakets gelöst durch ein Verschlusspaket mit den Merkmalen des Patentanspruchs 1. Vorteilhafte Weiterbildungen sind in den zugehörigen Unteransprüchen angegeben.

Hinsichtlich des Schwingungsdämpfers wird die Aufgabe gelöst durch einen Schwingungsdämpfer mit den Merkmalen des Patentanspruchs 9. Vorteilhafte Weiterbildungen sind in den zugehörigen Unteransprüchen angegeben.

Bei dem erfindungsgemäßen Verschlusspaket wird die Abdichtung des Dämpferrohres gegenüber der Umgebung durch ein Dichtungselement bewirkt, das in eine Aufnahmenut eingesetzt ist. Dabei wird die Aufnahmenut einerseits durch einen sich in radialer Richtung erstreckenden Absatz gebildet, der am Außenumfang zumindest des Trägerteils oder am Außenumfang zumindest des Führungsteils angeordnet ist. Zur Bildung der Aufnahmenut wirkt der genannte radiale Absatz mit einem Teil der Oberfläche des jeweils anderen Bauteils zusammen.

Nach einer ersten Ausführungsform der Erfindung ist der radiale Absatz ausschließlich radial außen an der dem Führungsteil zugewandten Seite des Trägerteils angeordnet. Dann bildet er mit der dem Trägerteil zugewandten Oberfläche des Führungsteils die Aufnahmenut für das Dichtungselement aus. Nach einer zweiten Ausführungsform der Erfindung ist der radiale Absatz ausschließlich radial außen an der dem Trägerteil zugewandten Seite des Führungsteils angeordnet. Dann bildet er mit der dem Führungsteil zugewandten Oberfläche des Trägerteils die Aufnahmenut für das Dichtungselement aus. Nach einer dritten Ausführungsform der Erfindung ist sowohl in dem Trägerteil als auch in dem Führungsteil radial außen jeweils ein radialer Absatz vorgesehen, so dass beide einander zugewandten Absätze sich zu der Aufnahmenut für das Dichtungselement ergänzen.

In allen drei vorgenannten Ausführungsformen können nach einer bevorzugten Ausführungsform der Erfindung sowohl das Trägerteil als auch das Führungsteil jeweils werkzeugfallend (d.h. ohne weitere Nachbearbeitung) durch-Sintern als einfache Sintermetallkörper hergestellt werden. Denn die Ausbildung des radialen Absatzes in dem Träger- und/oder dem Führungsteil wird durch die Verwendung eines entsprechend geformten Sinterwerkzeugs auf einfache und kostengünstige Weise erreicht. Insbesondere ist kein zusätzlicher spanender Bearbeitungsschritt erforderlich, um die Aufnahmenut auszubilden.

Um die Montage des Verschlusspakets zu erleichtern und zu vereinfachen, sollte das aus mehreren Bauteilen bestehende Verschlusspaket vor dem Einsetzen in das Dämpferrohr vormontiert werden können. Bei dem erfindungsgemäßen Verschlusspaket wird dies auf einfache Weise dadurch erreicht, dass das Trägerteil oder das Führungsteil im Bereich des Kontaktabschnittes mindestes eine Erhebung aufweist, die in eine entsprechende Vertiefung des Führungsteils oder des Trägerteils einsteckbar ist. Dazu weist die Erhebung ein geringes Übermaß in Bezug auf die Vertiefung auf, so dass durch das Einstecken der Erhebung in die Vertiefung eine kraftschlüssig zusammengesteckte Baueinheit aus Trägerteil und Führungsteil gebildet wird, welche auch die übrigen Verschlusspaketbestandteile wie z.B. die Kolbenstangendichtung zusammenhält. Das zusammengesteckte Verschlusspaket kann dann in einem Arbeitsschritt bei der Montage des Schwingungsdämpfers in das Dämpferrohr eingesetzt werden.

Nach einer besonders vorteilhaften Ausführungsform der Erfindung ist am Außenumfang des Führungsteils auf seiner dem Dämpferrohrinnenraum zugewandten Seite eine Ausnehmung vorgesehen, in die Material des Dämpferrohres durch eine plastische Verformung desselben eingeformt werden kann. Insbesondere kann in das Dämpferrohr von außen eine Sicke eingeformt werden, so dass die Dämpferrohrwand in die Ausnehmung am Führungsteil eingreift. Auf diese Weise wird das Führungsteil axial in Richtung Dämpferrohrinnenraum von der Sicke abgestützt. Das Führungsteil kann so in Richtung Dämpferrohrinnenraum wirkende Axialkräfte aufnehmen. Wenn das Führungsteil als Sinterbauteil ausgeführt ist, kann die Ausnehmung vorteilhaft spanlos an das Führungsteil angeformt werden. Dazu muss lediglich ein entsprechender Vorsprung in der Sinterform vorgesehen werden.

Vorteilhaft ist es auch, wenn sich das dem Dämpferrohrinnenraum abgewandte Trägerteil seinerseits über ein Widerlager an dem Dämpferrohr abstützt. Das Widerlager kann dabei durch einen Deckel gebildet sein, der fest mit dem Dämpferrohr verbunden, z.B. verschweißt ist. Alternativ kann das Widerlager auch dadurch gebildet sein, dass Material des Dämpferrohres durch eine radial nach innen gerichtete plastische Verformung des Dämpferrohres an dessen Ende in eine am Außenumfang des Trägerteils vorgesehene Ausnehmung eingeformt ist. Vorteilhaft ist diese Ausnehmung an der dem Dämpferrohrinnenraum abgewandten Seite des Trägerteils angeordnet. Auch in diesem Fall kann die Ausnehmung spanlos aus einfache Weise in das Trägerteil eingebracht werden, wenn dieses als Sinterbauteil ausgeführt wird.

Wenn sowohl das Führungsteil als auch das Trägerteil die vorstehend beschriebenen Ausnehmungen aufweisen und das Material des Dämpferrohres plastisch in diese Ausnehmungen eingeformt ist, dann wirkt auf das Trägerteil über dessen Umfang eine schräg zur Mittelachse des Dämpferrohres und in Richtung Dämpferrohrinnenraum ausgerichtete Kraft ein. Diese Kraft weist somit eine radiale und eine axiale Kraftkomponente auf. Gleichzeitig wirkt auf das Führungsteil über dessen Umfang eine ebenfalls schräg zur Mittelachse des Dämpferrohres ausgerichtete und vom Dämpferrohrinnenraum wegweisende Kraft ein. Diese Kraft besitzt ebenfalls eine radiale und eine axiale Komponente. Durch diese beiden Kräfte wird das Verschlusspaket im montierten Zustand fest unter Vorspannung zusammengehalten. Das Verschlusspaket kann Axialkräfte in beiden Richtungen aufnehmen, so dass von ihm sowohl Druckanschlag- als auch Zuganschlagkräfte aufgenommen werden können.

Im Folgenden wird die Erfindung anhand einer Zeichnung näher erläutert. Im Einzelnen zeigen
- Fig. 1: ein erfindungsgemäßes Verschlusspaket nach einer ersten Ausführungsform der Erfindung,
- Fig. 2: ein erfindungsgemäßes Verschlusspaket nach einer zweiten Ausführungsform der Erfindung.

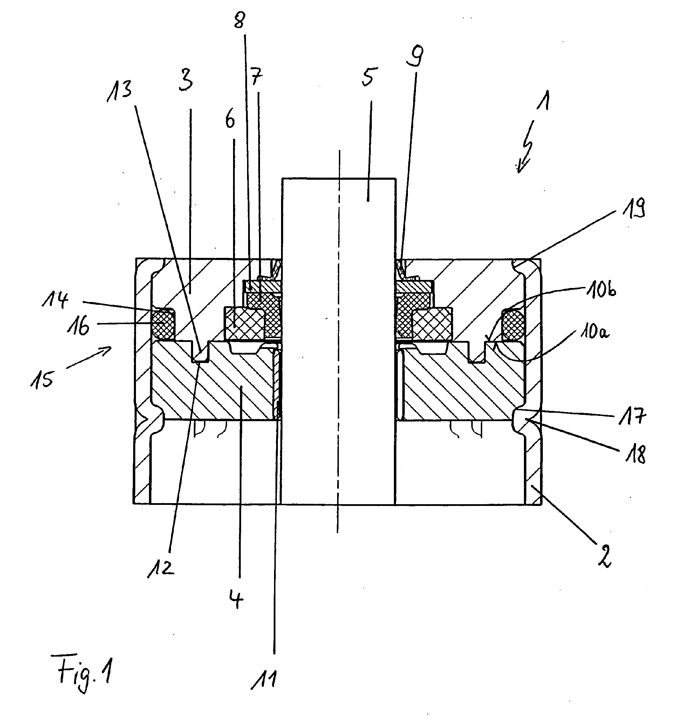

Das in Fig. 1 dargestellte Verschlusspaket 1 ist endseitig in ein Dämpferrohr 2 eines Schwingungsdämpfers eingesetzt. Das Verschlusspaket umfasst ein Trägerteil 3 und ein Führungsteil 4. Das Trägerteil weist an seiner der Kolbenstange 5 zugewandten Innenseite eine abgestufte Ausnehmung auf. In dieser Ausnehmung sind Dichtungselement 6, 7, ein Stützring 8 und ein Ölabstreifer 9 in Wirkverbindung mit der Kolbenstange 5 angeordnet.

Das Trägerteil 3 stützt sich mit einer Kontaktfläche 10a an einer entsprechenden Kontaktfläche 10b des benachbart zu dem Trägerteil 3 angeordneten Führungsteils 4 ab. Das Führungsteil 4 weist eine zentrale Ausnehmung auf, in die eine Führungsbuchse 11 eingesetzt ist. Über die Führungsbuchse 11 wird die Kolbenstange 5 geführt. Alternativ kann auch auf die Führungsbuchse 11 verzichtet werden, in diesem Fall steht dann das Führungsteil 4 selbst in führendem Kontakt mit der Kolbenstange 5. Wird auf die Führungsbuchse 11 verzichtet, so kann es sinnvoll sein, die Innenwand der die Kolbenstange 5 führenden Ausnehmung des Führungsteils 4 zu beschichten oder einer sonstigen, die Reibung vermindernden Oberflächenbehandlung zu unterziehen.

Das Führungsteil 4 weist an seiner dem Trägerteil 3 zugewandten Oberfläche eine in Umfangsrichtung umlaufende, ringförmige Vertiefung 12 auf, in welche eine entsprechende Erhebung 13, die an der dem Führungsteil 4 zugewandten Oberfläche des Trägerteils 3 angeordnet ist, eingreift. Die Vertiefung 12 und die Erhebung 13 sind in ihrer Dimensionierung so aufeinander abgestimmt, dass die Erhebung 13 unter Ausbildung einer kraftschlüssigen Steckverbindung lösbar in die Vertiefung 12 eingesteckt werden kann. Dazu weist die Erhebung 13 ein geringes Übermaß in Bezug auf die Vertiefung 12 auf. Auf diese Weise lässt sich das Verschlusspaket vormontieren, bevor es beim Zusammenbau des Schwingungsdämpfers als komplette Baueinheit in das Dämpferrohr 2 eingesetzt wird. Durch die Steckverbindung zwischen Trägerteil 3 und Führungsteil 4 werden die in der inneren Ausnehmung des Trägerteils 3 angeordneten Einzelteile (d.h. die Kolbenstangendichtungselemente, der Stützring und der Ölabstreifer) fixiert zueinander gehalten. Gleichzeitig dienen Erhebung 13 und Vertiefung 12 zur Zentrierung von Trägerteil 3 und Führungsteil 4 zueinander.

In dem in Fig. 1 dargestellten Ausführungsbeispiel weist das Trägerteil 3 an seinem Außenumfang an der dem Führungsteil 4 zugewandten Seite einen radialen Absatz 14 auf, der mit der dem Trägerteil 3 zugewandten Oberfläche des Führungsteils 4 eine Aufnahmenut 15 zur Aufnahme eines Dichtungselementes 16 bildet. Das Dichtungselement 16 ist in Fig. 1 als einfacher O-Ring ausgebildet. Das Dichtungselement 16 wirkt mit der Innenwand des Dämpferrohres 2 zusammen und dichtet den Dämpferrohrinnenraum nach außen gegen die Umgebung ab.

Alternativ könnte nach einer nicht dargestellten Ausführungsform der Erfindung der radiale Absatz 14 anstatt in dem Trägerteil 3 in dem Führungsteil 4 angeordnet sein. Dann würde dieser Absatz zusammen mit der dem Führungsteil 4 zugewandten Oberfläche des Trägerteils 3 die Aufnahmenut 15 für das Dichtungselement 16 bilden. Ebenso wäre es alternativ möglich, sowohl in das Trägerteil 3 als auch in das Führungsteil 4 jeweils einen radialen Absatz 14 einzubringen. In diesem Fall bilden die beiden radialen Absätze 14 gemeinsam die Aufnahmenut 15 für das Dichtungselement 16.

Bei dem in Fig. 1 dargestellten Ausführungsbeispiel ist das Verschlusspaket 1 durch plastische, radial nach innen gerichtete Verformungen des Dämpferrohres 2 form- und kraftschlüssig in dem Dämpferrohr gehalten. An der dem Dämpferrohrinnenraum zugewandten Seite des Führungsteils 4 ist an dessen Außenumfang eine Ausnehmung 17 vorhanden, in welche das Dämpferrohr 2 plastisch eingeformt ist. Um dies zu erreichen, ist von außen in das Dämpferrohr eine Sicke 18 eingeformt worden. In ähnlicher Weise weist das Trägerteil 3 an seiner dem Dämpferrohrinnenraum abgewandten Seite an seinem Außenumfang eine Ausnehmung 19 auf, in die das Ende des Dämpferrohres 2 plastisch eingeformt ist. Auf diese Weise ist das Verschlusspaket 1 zwischen den plastischen Einformungen des Dämpferrohres 2 formschlüssig gehalten. Gleichzeitig wirken ausgehend von dem Dämpferrohr 2 aufgrund der plastischen, radial nach innen gerichteten Verformungen des Dämpferrohrmaterials gegeneinander gerichtete Kräfte auf das Verschlusspaket ein. Auf das Trägerteil 3 wirkt über dessen Außenumfang eine schräg zur Mittelachse des Dämpferrohres 2 und Richtung Dämpferrohrinnenraum gerichtete Kraft ein, während auf das Führungsteil 4 eine ebenfalls schräg zur Mittelachse des Dämpferrohres 2 und von dem Dämpferrohrinnenraum weg gerichtete Kraft einwirkt. Diese Kräfte sind in Fig. 1 durch Pfeile angedeutet. Auf diese Weise sind Trägerteil 3 und Führungsteil 4 gegeneinander verspannt, d.h. diese beiden Bauteile des Verschlusspakets sind stets in ihrer Fügerichtung belastet.

Durch die formschlüssige Verbindung des Trägerteils 3 und des Führungsteils 4 mit dem Dämpferrohr 2 kann das erfindungsgemäße Verschlusspaket 1 sowohl Druckanschlagkräfte als auch Zuganschlagkräfte aufnehmen.

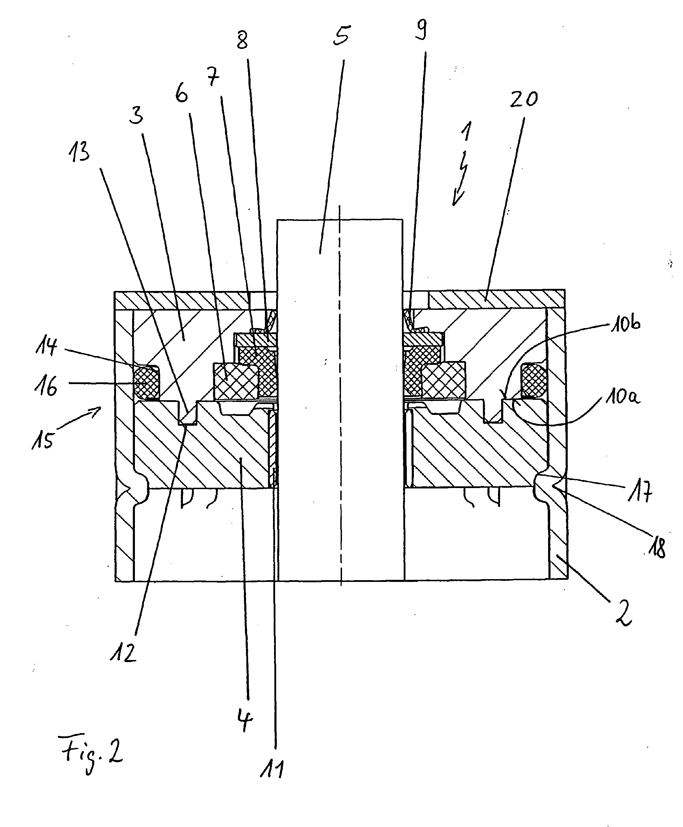

In Fig.2 ist ein zweite Ausführungsform der Erfindung dargestellt. Gleiche Bauteile sind dabei mit denselben Bezugszeichen bezeichnet wie in Fig. 1. Das in Fig. 2 dargestellte Verschlusspaket 1 entspricht im Wesentlichen dem in Fig. 1 dargestellten Verschlusspaket, lediglich das Trägerteil 3 weicht ab. So ist an der vom Dämpferrohrinnenraum abgewandten Seite des Trägerteils 3 am Außenumfang keine Ausnehmung vorgesehen, und das Ende des Dämpferrohres 2 ist nicht plastisch verformt. Stattdessen ist das Dämpferrohr 2 mit einem Deckel 20 verschlossen, der fest mit dem Dämpferrohr 2 verbunden, z.B. verschweißt ist. Dieser Deckel 20 bildet bei dieser Ausführungsform das Widerlager, an dem sich das Verschlusspaket 1 abstützen kann, wenn es vom Dämpferrohrinnenraum weg gerichtete Zuganschlagkräfte aufnimmt. Die auf das Trägerteil 3 in diesem Fall einwirkende Kraft ist abweichend von dem in Fig. 1 dargestellten Ausführungsbeispiel nicht schräg, sondern im Wesentlichen parallel zur Mittellinie des Dämpferrohres 2 ausgerichtet.

### Bezugszeichenliste

- 1: Verschlusspaket
- 2: Dämpferrohr
- 3: Trägerteil
- 4: Führungsteil
- 5: Kolbenstange
- 6: Dichtungselement
- 7: Dichtungselement
- 8: Stützring
- 9: Ölabstreifer
- 10a: Kontaktfläche
- 10b: Kontaktfläche
- 11: Führungsbuchse
- 12: Vertiefung
- 13: Erhebung
- 14: Absatz
- 15: Aufnahmenut
- 16: Dichtungselement
- 17: Ausnehmung
- 18: Sicke
- 19: Ausnehmung
- 20: Deckel

## Patentansprüche

1. Verschlusspaket (1) zum Verschließen eines Dämpferrohres (2) eines Schwingungsdämpfers, insbesondere eines hydraulischen oder hydropneumatischen Schwingungsdämpfers für Radaufhängungen von Kraftfahrzeugen, umfassend ein Führungsteil (4) zur Führung der Kolbenstange (5) und ein zumindest ein Dichtungselement (6, 7) aufnehmendes Trägerteil (3), wobei das Führungsteil (4) eine dem Trägerteil (3) und das Trägerteil (3) eine dem Führungsteil (4) zugewandte Oberfläche aufweist, und wobei Führungsteil (4) und Trägerteil (3) sich im zusammengebauten Zustand des Verschlusspakets (1) in einem Kontaktabschnitt mit ihren einander zugewandten Oberflächen gegeneinander abstützen, **dadurch gekennzeichnet, dass** zumindest das Trägerteil (3) oder zumindest das Führungsteil (4) an seinem Außenumfang einen sich in radialer Richtung erstreckenden Absatz (14) aufweist, der mit der dem Absatz (14) zugewandten Oberfläche des jeweils anderen Teiles (4, 3) eine Aufnahmenut (15) für ein zwischen Verschlusspaket (1) und Dämpferrohr (2) wirksames Dichtungselement (16) bildet.

2. Verschlusspaket nach Anspruch 1, **dadurch gekennzeichnet, dass** der sich in radialer Richtung erstreckende Absatz (14) sowohl am Außenumfang des Trägerteils (3) als auch am Außenumfang des Führungsteils (4) angeordnet ist.

3. Verschlusspaket nach Anspruch 1 oder 2, **dadurch gekennzeichnet, dass** das Trägerteil (3) oder das Führungsteil (4) im Bereich des Kontaktabschnittes mindestens eine Erhebung (13) aufweist, welche in eine entsprechende Vertiefung (12) des Führungsteils (4) oder des Trägerteils (3) unter Ausbildung einer lösbaren kraftschlüssigen Verbindung einsteckbar ist.

4. Verschlusspaket nach einem der Ansprüche 1 bis 3, **dadurch gekennzeichnet, dass** das Führungsteil (4) an seinem Außenumfang auf der dem Dämpferrohrinnenraum zugewandten Seite mindestens eine Ausnehmung (17) aufweist, in die das Dämpferrohr (2) durch eine plastische Umformung einformbar ist.

5. Verschlusspaket nach Anspruch 4, **dadurch gekennzeichnet, dass** die Ausnehmung (17) sich über den gesamten Umfang des Führungsteils (4) erstreckt.

6. Verschlusspaket nach einem der Ansprüche 1 bis 5, **dadurch gekennzeichnet, dass** das Trägerteil (3) an seinem Außenumfang auf der dem Dämpferrohrinnenraum abgewandten Seite mindestens eine Ausnehmung (19) aufweist, in welche das Dämpferrohr (2) durch eine plastische Umformung einformbar ist.

7. Verschlusspaket nach Anspruch 6, **dadurch gekennzeichnet, dass** die Ausnehmung (19) sich über den gesamten Umfang des Trägerteils (3) erstreckt.

8. Verschlusspaket nach einem der vorhergehenden Ansprüche, **dadurch gekennzeichnet, dass** das Führungsteil (4) oder das Trägerteil (3) oder das Führungsteil (4) und das Trägerteil (3) als Sinterbauteile ausgebildet sind.

9. Schwingungsdämpfer, insbesondere hydraulischer oder hydropneumatischer Schwingungsdämpfer für Radaufhängungen von Kraftfahrzeugen, mit einem Dämpferrohr (2), einer oszillierend in das Dämpferrohr (2) eintauchenden Kolbenstange (5) und einem das Dämpferrohr (2) verschließenden Verschlusspaket (1) nach einem der Ansprüche 1 bis 3, **dadurch gekennzeichnet, dass** das Führungsteil (4) an seinem Außenumfang auf der dem Dämpferrohrinnenraum zugewandten Seite mindestens eine Ausnehmung (17) aufweist, in die das Dämpferrohr (2) mittels einer plastischen Verformung eingeformt ist.

10. Schwingungsdämpfer nach Anspruch 9, **dadurch gekennzeichnet, dass** die Ausnehmung (17) sich über den gesamten Umfang des Führungsteils (4) erstreckt und das Dämpferrohr (2) durch eine umlaufend eingeformte Sicke (18) in die Ausnehmung (17) eingeformt ist.

11. Schwingungsdämpfer nach einem der Ansprüche 9 bis 10, **dadurch gekennzeichnet, dass** sich das Trägerteil (3) über ein Widerlager an dem Dämpferrohr (2) abstützt.

12. Schwingungsdämpfer nach Anspruch 11, **dadurch gekennzeichnet, dass** das Trägerteil (3) an seinem Außenumfang auf der dem Dämpferrohrinnenraum abgewandten Seite mindestens eine Ausnehmung (19) aufweist, und dass zur Bildung des Widerlagers das Dämpferrohr (2) durch eine plastische Verformung in die mindestens eine Ausnehmung (19) eingeformt ist.

13. Schwingungsdämpfer nach Anspruch 12, **dadurch gekennzeichnet, dass** die Ausnehmung (19) sich über den gesamten Umfang des Trägerteils (3) erstreckt und dass das Ende des Dämpferrohres (2) durch eine plastische Verformung in die Ausnehmung (19) eingeformt ist.

14. Schwingungsdämpfer nach Anspruch 11, **dadurch gekennzeichnet, dass** an dem Dämpferrohr (2) ein Deckel (20) befestigt ist, der das Widerlager zur Abstützung des Trägerteils (3) bildet.
